# EUROPÄISCHE PATENTSCHRIFT

(11) **EP 1 671 407 B1**
(45) Veröffentlichungstag und Bekanntmachung des Hinweises auf die Patenterteilung: **24.10.2007**
(21) Anmeldenummer: 04787000.1
(22) Anmeldetag: 24.09.2004
(51) Int. Cl.: H02G 1/12

(54) **AUTOMATISCHE ABISOLIERZANGE**
AUTOMATIC WIRE STRIPPER
PINCE A DENUDER AUTOMATIQUE

(30) Priorität: 09.10.2003 DE 20315756 U; 12.03.2004 DE 102004012152
(43) Veröffentlichungstag der Anmeldung: 21.06.2006
(73) Patentinhaber: Krampe, Franz, 59387 Ascheberg-Herbern (DE)
(72) Erfinder: KRAMPE, Franz, 59387 Ascheberg-Herbern (DE); KRAMPE, Stephan, 59387 Ascheberg-Herbern (DE)
(74) Vertreter: Tarvenkorn, Oliver
(86) Internationale Anmeldenummer: PCT/EP2004/010718
(87) Internationale Veröffentlichungsnummer: WO 2005/036707

(56) Entgegenhaltungen:
- DE-A1- 3 922 016
- GB-A- 2 084 503
- GB-A- 2 294 162

## Beschreibung

Die Erfindung betrifft eine automatische Abisolierzange, insbesondere für Flachkabel mit wenigstens:
- einer Klemmenarmeinheit, an dessen vorderem Ende wenigstens eine Klemmbacke angeordnet ist;
- einer verschiebbar in der Klemmenarmeinheit gelagerten Messereinheit, bestehend aus wenigstens einem Messerbügel und einem damit über ein Messereinheitsgelenk schwenkbar verbundenen Messerschlitten,
- einem Grundgehäuse mit
   - einem oberen Klemmenarm, in dem die Messereinheit verschiebbar geführt ist,
   - wenigstens einer Klemmbacke,
   - einem Klemmenarmschwenklager, an dem die Klemmenarmeinheit schwenkbar gelagert ist;
- einer Griffhebeleinheit, die an einem Griffhebelschwenklager schwenkbar mit dem Grundgehäuse verbunden ist, und die wenigstens ein Federelementlager aufweist.

Eine automatische Abisolierzange, mit denen die Enden eines elektrischen Kabels von der isolierenden Ummantelung befreit werden können, ist beispielsweise aus der DE 39 22 016 C2 bekannt. Hierbei wird das Kabel zwischen zwei mit ihren Klingen gegeneinander angestellte Messerelemente gelegt. Das isolierte Kabel wird neben den Messern festgeklemmt. Durch Heranziehen des beweglichen Griffhebels gegen den Handgriff des Grundgehäuses werden die Messerelemente in die Isolierung eingedrückt. Die Messer werden mit weiterer Griffbewegung in Richtung des Kabelendes verschoben, so dass die von den Messern durchtrennte Isolierung von dem elektrischen Leiter abgestreift wird. All diese Vorgänge können bei der bekannten automatischen Abisolierzange mit einer einzigen Bewegung, nämlich mit dem Heranschwenken des Griffhebels an den Handgriff des Grundgehäuses, erreicht werden. Das Abisolieren von elektrischen Kabeln wird auf diese Weise erheblich erleichtert.

Bei einer weiteren bekannten automatischen Abisolierzange gemäß der GB-A 2 294 162 ist die Funktion wie bei der vorstehend erläuterten Abisolierzange, wobei die Schließbewegung der Messereinheit und die lineare Abzugsbewegung der Messereinheit mit dem eingeschlossenen Kabelende unabhängig voneinander erfolgen.

Mit beiden bekannten Abisolierzangen kann jedoch nur eine bestimmte Länge eines Kabelendes abisoliert werden, da die Messer an schwenkbar miteinander verbundenen Schenkeln befestigt sind und sich als maximale Arbeitslänge der Abstand der Messer zur Schwenkachse, vor die das Kabelende stößt, ergibt. Dieser Abstand ist zwar ausreichend, um den elektrischen Leiter am Kabelende freizulegen, der dann in entsprechende Klemmen an elektrischen Vorrichtungen eingeführt werden kann. Es ist jedoch nicht möglich, den äußeren Mantel eines mehrfach isolierten elektrischen Kabels über eine größere Länge zu entfernen, wie sie beispielsweise erforderlich ist, um die einzelnen Adern bei unversehrter Einzeladerisolierung in Abzweigdosen etc. anzuordnen. Während runde Kabel noch behelfsweise seitlich aus den Messerschenkeln heraus geführt werden können, ist ein seitliches Abknicken von Flachkabeln nicht möglich, so dass bei diesen mit der bekannten Zange der äußere Mantel überhaupt nicht auf eine größere Länge entfernt werden kann.

Es stellt sich daher die Aufgabe, eine automatische Abisolierzange so weiter zu entwickeln, dass beliebig lange Stücke einer Kabelummantelung, insbesondere bei Flachkabeln, abgetrennt werden können.

Diese Aufgabe wird durch eine automatische Abisolierzange mit den Merkmalen des Anspruchs 1 gelöst.

Erfindungswesentlich ist die Kniehebeleinheit, durch die die gesamte Bewegungsabfolge beim Abisolieren gesteuert und eine gleichmäßige Kraftverteilung in allen Bewegungsphasen bewirkt wird. Kraftspitzen bei der Betätigung führen bei der erfindungsgemäßen Kniehebeleinheit dazu, dass bestimmte Positionen der Bauelemente eingenommen oder wieder verlassen werden. Damit ist es nicht möglich, durch Unachtsamkeit bzw. zu große Kraft bei der Betätigung das abzuisolierende Kabel oder gar Teile der Abisolierzange selbst zu zerstören. Dadurch können viele Baugruppen der Abisolierzange auch wirtschaftlich aus Kunststoff gefertigt werden.

Die Durchführung langer Kabel kann beispielsweise durch einen nach oben offenen Messerbügel und ein nach oben offenes Grundgehäuse ermöglicht sein. Vorzugsweise weist aber der Messerbügel und/oder der Messerschlitten wenigstens im Bereich der Schwenkachse einen U-förmigen Querschnitt auf. Zwischen Messerschlitten und Messerbügel ist so ein Kabeldurchtrittskanal gebildet.

Um die Reibungskräfte und damit die vom Bediener aufzubringende Betätigungskraft zu reduzieren, sollte die Kniehebelmittelachse über eine Kniehebelführungswalze rollbar in der Kniehebelachsenführungsnut gelagert sein.

Die Klemmenarmeinheit weist bei bevorzugten Ausführungsformen an ihrer Unterseite eine Führungskulisse auf, auf der die Messereinheit über eine Messereinheitsführungswalze geführt ist. Die Führungskulisse ist mit wenigstens einer Rastausnehmung versehen. Durch die Führungskulisse wird die Bewegung der Messereinheit in der Klemmenarmeinheit gesteuert. Außerdem wird durch die Rastausnehmung in einer ersten Bewegungsphase des Abisoliervorgangs ein Festlager für die Kniehebeleinheit geschaffen.

Die Messereinheitsführungswalze ist bei der bevorzugten Ausführungsform weiterhin an dem Federaufnahmegelenk gelagert, so dass die von der Federeinheit übertragene Andruckkraft direkt auf die Messereinheitsführungswalze drückt und diese gegebenenfalls in eine Rastausnehmung hinein drückt.

Die zweite Kniehebelendachse ist bevorzugt in der Schwenkachse der Messereinheit angeordnet, so dass durch einen von der Kniehebeleinheit auf die zweite Kniehebelendachse wirkenden Kraftvektor nur eine translatorische Bewegung der Messereinheit bewirkt wird, nicht aber ein Öffnen oder Schließen der Messereinheit.

Der Messerschlitten und/oder der Messerbügel sind vorzugsweise mit auswechselbaren Messerelementen versehen sind, um stumpfe Klingen leicht auswechseln zu können.

Der obere Klemmenarm und/oder die Klemmenarmeinheit können mit auswechselbaren Klemmbacken versehen sein, so dass nicht nur beschädigte Klemmbacken ausgetauscht werden können, sondern auch spezielle Klemmbacken eingesetzt werden können, die auf den jeweils mit der Abisolierzange zu bearbeitenden Kabeltyp abgestimmt sind.

Weitere vorteilhafte Ausgestaltungen der Erfindung sind den Unteransprüchen zu entnehmen und werden nachfolgend anhand von Ausführungsbeispielen mit Bezug auf die Zeichnung näher erläutert. Die Figuren zeigen im Einzelnen:
- Fig. 1 bis 3: die erfindungsgemäße Abisolierzange in verschiedenen Arbeitsstellungen, jeweils in seitlicher Schnittansicht;
- Fig. 4: die Abisolierzange gemäß Fig. 1 bis 3 mit einem langen Kabelende;
- Fig. 5: die Abisolierzange in seitlicher Ansicht;
- Fig. 6: eine Abisolierzange mit Kabelschneider in seitlicher Ansicht; und
- Fig. 7: eine weitere Ausführungsform einer Abisolierzange, in seitlicher Schnittansicht.

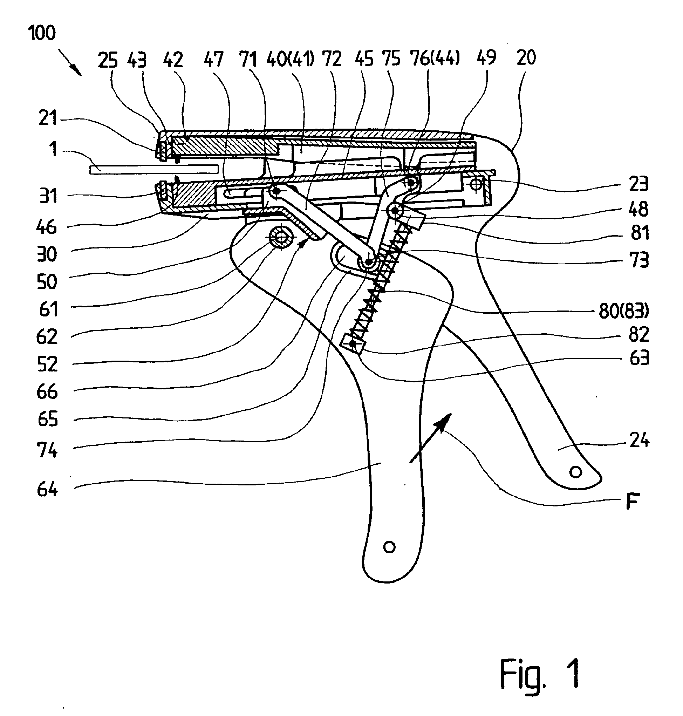

In Fig. 1 ist ein Ausführungsbeispiel der erfindungsgemäßen Abisolierzange 100 in seitlicher Schnittansicht dargestellt. Im Wesentlichen setzt sich diese zusammen aus:
- einem Grundgehäuse 20,
- einer Klemmenarmeinheit 30,
- einer Messereinheit 40,
- einem Anschlagelement 50,
- einer Griffhebeleinheit 60,
- einer Kniehebeleinheit 70 und
- einem Federelement 80.

Das Grundgehäuse 20 läuft an seinem oberen Ende in einem oberen Klemmenarm 25 aus, an dessen vorderem Ende eine Klemmbacke 21 angeordnet ist. Nach unten hin ist ein Handgriffbereich 24 ausgebildet.

Mit dem Grundgehäuse 20 beweglich verbunden sind:
- die Klemmenarmeinheit 30 über das Klemmenarmschwenklager 23 und
- die Griffhebeleinheit 60 über das Griffhebelgelenk 61.

Die Länge der Klemmenarmeinheit 30 ist so gewählt, dass das freie Ende etwa dem Ende des oberen Klemmenarms 25 gegenüber liegt. An dem freien Ende ist ebenfalls eine Klemmbacke 31 angeordnet, die der Klemmbacke 21 des Grundgehäuses 20 gegenüber liegt. Die Klemmenarmeinheit 30 ist so ausgebildet, dass sie den Messerschlitten 45 als unteres Teilelement der Messereinheit 40 aufnimmt, wobei der Messerschlitten 45 über einen Teil der Länge der Klemmenarmeinheit 30 verschiebbar darin gelagert ist.

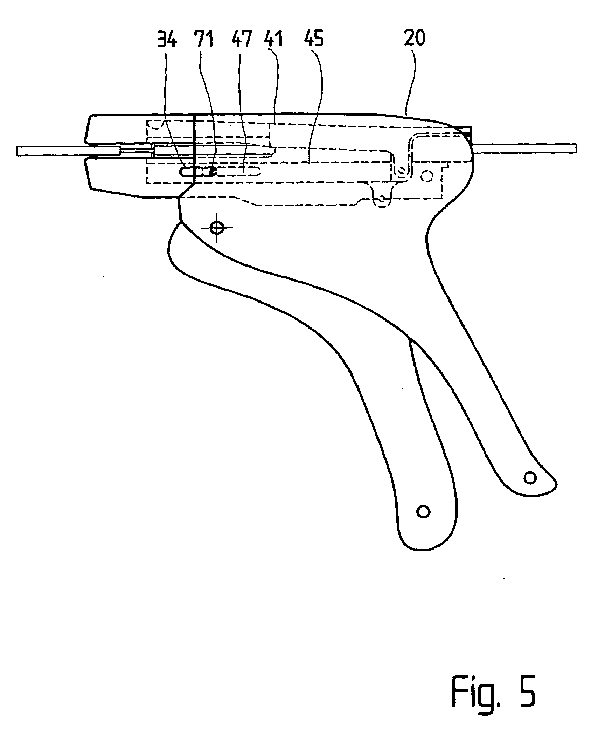

Wie insbesondere Fig. 5 zeigt, weist die Klemmenarmeinheit 30 an ihrer seitlichen Wand wenigstens eine Kniehebelachsenführungsnut 34 (vgl. Fig. 5) auf, durch die der Verschiebeweg einer ersten Kniehebelendachse 71 in bestimmten Arbeitsstellungen begrenzt ist. An ihrer Unterseite ist die Klemmenarmeinheit 30 mit einem Schiebesitz für das Anschlagelement 50 und einer Führungskulisse 32 für eine Messereinheitsführungswalze 49 ausgebildet.

Die Griffhebeleinheit 60 weist an dem Griffhebelgelenk 61 einen Anschlagbolzen 62 auf. Hierbei handelt es sich um einen Festanschlag für das Anschlagelement 50 der Kniehebeleinheit 70. Der Anschlagbolzen 62 kann entweder zylindrisch als starre Achse fest mit der Griffhebeleinheit 61 verbunden sein, oder er ist um das Griffhebelgelenk 61 rotierbar angeordnet.

An dem dem Griffhebelgelenk 61 gegenüberliegenden Ende ist ein Handgriffbereich 64 ausgebildet. Länge und Krümmungen sind so gewählt und mit dem Handgriffbereich 24 des Grundgehäuses 20 abgestimmt, dass die erfindungsgemäße Abisolierzange 100 vom Benutzer leicht gehalten und betätigt werden kann.

Die Griffhebeleinheit 60 weist mit der Kniehebelachsenführungsnut 66, die vorzugsweise mit einem erhöhtem Führungssteg 65 umrandet ist, eine Schiebeführung für eine Kniehebelmittelachse 73 auf.

Außerdem ist an der Griffhebeleinheit 60 ein Federelement 80 an einem Federelementschwenklager 63 schwenkbar gelagert. Das Federelement 80 besteht im Wesentlichen aus einem oberen und einem unteren Federlagerelement 81, 82, die auf derselben Mittelachse angeordnet sind und zwischen denen eine Druckfeder 83 angeordnet ist. Das obere Federlagerelement 81 ist schwenkbar mit der Messereinheit 40 über eine Federelementaufnahmeachse 48 verbunden.

Die Messereinheit 40 setzt sich im Wesentlichen zusammen aus einem unteren Messerschlitten 45 und einem damit schwenkbar verbundenen oberen Messerbügel 41. Der Messerschlitten 45 und der Messerbügel 41 weisen an ihrem freien Ende jeweils wenigstens ein Messerelement 43, 46 auf, mit denen die Kunststoffummantelung eines elektrischen Kabels 1 wenigstens teilweise durchschnitten werden kann. Der Messerschlitten 45 und der Messerbügel 41 sind über ein Messereinheitsgelenk 44 schwenkbar miteinander verbunden. Im Bereich des Messereinheitsgelenks 44 ist der Messerbügel 41 mit einem U-förmigen Querschnitt ausgebildet, wobei das offene Ende des Querschnitts nach unten, zum Messerschlitten 45 hin, weist. Hierdurch ergibt sich zwischen der Oberseite des Messerschlittens 45 und der Unterseite der in Figur 1 geschnittenen oberen Wand des Messerbügels 41 ein Zwischenraum, durch den das Kabel 1 hindurch führbar ist. An der Unterseite des Messerschlittens 45 ist eine Gelenkaufnahme angeformt, in der eine Messereinheitsführungswalze 49 drehbar gelagert ist. Vorzugsweise fällt dabei die Achse 48 der Messereinheitsführungswalze 49 mit dem Schwenkgelenk des oberen Federlagerelements 81 zusammen.

Die Messereinheitsführungswalze 49 läuft entlang der Führungskulisse 32 an der Unterseite der Klemmenarmeinheit 30. Die Führungskulisse 32 ist mit Rastausnehmungen, Auflaufschrägen etc. versehen, um die Bewegung der Messereinheit 40 gegenüber der Klemmenarmeinheit 30 zu steuern, wie nachfolgend noch erläutert werden wird.

Kernstück der erfindungsgemäßen Abisolierzange 100 ist neben der Messereinheit 40 mit dem Kabeldurchtrittskanal die Kniehebeleinheit 70 zusammen mit dem Anschlagelement 50.

Die Kniehebeleinheit 70 setzt sich aus einem ersten Kniehebel 72 und einem damit gelenkig über eine Kniehebelmittelachse 73 verbundenen zweiten Kniehebel 75 zusammen. Die Kniehebelmittelachse 73 ist mittels einer Kniehebelführungswalze 74 in der Kniehebelachsenführungsnut 66 der Griffhebeleinheit 60 verschiebbar geführt.

Der zweite Kniehebel 75 ist mit seiner zweiten Kniehebelendachse 76 gelenkig mit der Messereinheit 40 verbunden; vorzugsweise fallen dabei die zweite Kniehebelendachse 76 und das Messereinheitsgelenk 44 zusammen. Hierdurch wird erreicht, dass die durch den Kniehebel 75 auf die Messereinheit 40 ausgeübte Kraft nur zur Verschiebung derselben gegenüber der Klemmenarmeinheit 30 führt, nicht aber zu einer Schwenkbewegung des Messerschlittens 45 gegenüber dem Messerbügel 41.

Der erste Kniehebel 72 ist bei dem dargestellten Ausführungsbeispiel mit seiner ersten Kniehebelendachse 71 sowohl in der Führungskulisse 32 der Klemmenarmeinheit 30 wie auch in der Kniehebelachsenführungsnut 47 der Messereinheit 40 geführt. Während die Führungskulisse 32 der Klemmenarmeinheit 30 nur eine bestimmte Länge aufweist und den Bewegungsbereich der ersten Kniehebelendachse 71 begrenzt, ist die Kniehebelachsenführungsnut 47 der Messereinheit 40 so lang ausgebildet, dass die Messereinheit 40 unabhängig von der jeweiligen Stellung der ersten Kniehebelendachse 71 über den gesamten möglichen Verschiebeweg innerhalb der Klemmenarmeinheit 30 bewegbar ist.

Mit der ersten Kniehebelendachse 71 ist das Anschlagelement 50 gelenkig verbunden. Dieses weist eine Stützfläche auf, mit der sich das Anschlagelement 50 an der Unterseite der Klemmenarmeinheit 30 abstützt. Weiterhin weist das Anschlagelement 50 eine Anschlagfläche 52 auf, die schräg zu der Stützfläche und in etwa senkrecht zum Kraftvektor einer vom Bediener bei der Betätigung der Handgriffe 24, 64 aufgebrachten Kraft F ist.

Die erfindungsgemäße Kinematik wird nachfolgend anhand der in Fig. 1 bis 3 dargestellten Bewegungsabfolge beim Abisolieren eines elektrischen Leiters erläutert:

In Fig. 1 ist eine mögliche Ausgangsstellung dargestellt, bei der sowohl die Klemmenarmeinheit 30 mit ihrer Klemmbacke 31 von dem Klemmenarm 25 mit der Klemmbacke 21 des Grundgehäuses 20 abgespreizt ist, wie auch der Messerbügel 41 von dem Messerschlitten 45 abgespreizt sind, so dass sich die beiden Messerelemente 43, 46 beabstandet gegenüber liegen. Es ist nun möglich, ein Kabel 1 zwischen den Klemmbacken 21, 31 und den Messerelemente 43, 46 einzuführen, und zwar mit beliebiger Länge, sei es, wie in Fig. 1 dargestellt, relativ kurz zum vollständigen Abisolieren der einzelnen Adern am Ende, sei es zum Entfernen des äußeren Mantels des Kabels in einem größeren Abstand vom Kabelende.

Bei der erfindungsgemäßen Abisolierzange 100 ist es möglich, das Kabel 1 durch die gesamte Messereinheit 40 hindurch und an den beiden außen liegenden Schwenkachsgelenken 44 vorbei zu schieben, bis das Kabel 1 an der Rückseite des Grundgehäuses 20 wieder austritt. Damit kann die äußere Ummantelung mit großem Abstand zum Kabelende hin durchtrennt werden.

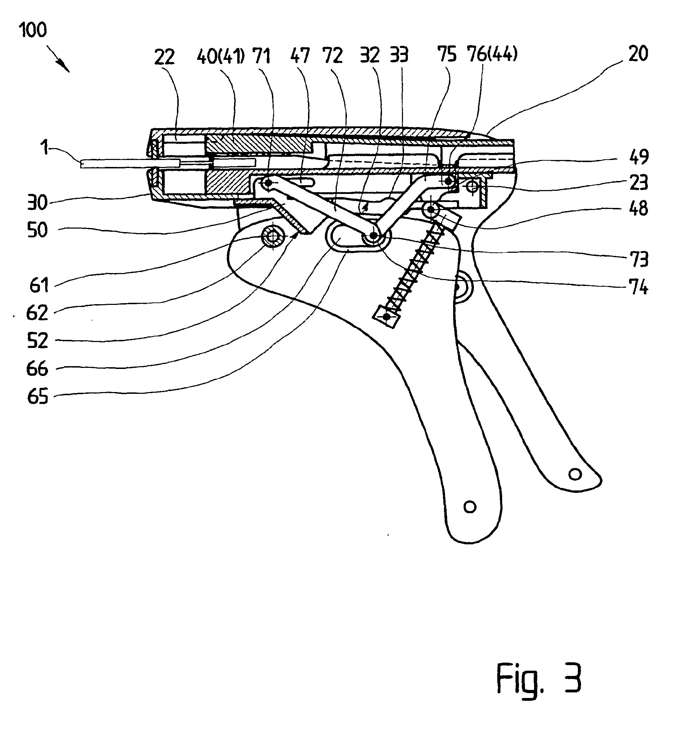

Bei der in Fig. 1 dargestellten Ausgangsstellung ist durch die Kraft der Feder 83 auch der Handgriff 64 vom Grundgehäuse 20 mit seinem Handgriff 24 abgespreizt. Die Messereinheit 40 liegt in ihrer vordersten Stellung innerhalb der Klemmenarmeinheit 30 bzw. dem Grundgehäuse 20. Bei dieser Stellung rastet die Messereinheitsführungswalze 49 in einer Rastausnehmung 33 der Führungskulisse 32 an der Unterseite der Klemmenarmeinheit 30 ein; die Rastausnehmung 33 ist in Fig. 3 erkennbar.

Durch die Schrägstellung der Kniehebelachsenführungsnut 66 wird bewirkt, dass bei der maximalen Abspreizung der Griffhebeleinheit 60 gemäß Fig. 1 die Kniehebelmittelachse 73 über die in der Kniehebelachsenführungsnut 66 laufende Kniehebelführungswalze 74 in den rechten Bereich der Nut 66 gezogen wird. Hierdurch wird gleichzeitig über den ersten Kniehebel 72 die erste Kniehebelendachse 71 mit dem Anschlagelement 50 zurückgezogen. Die Anschlagfläche 52 des Anschlagelements 50 wahrt einen Abstand zu dem Anschlagbolzen 62.

Bei Betätigung der erfindungsgemäßen Abisolierzange 100 wird die Griffhebeleinheit 60 um das Griffhebelgelenk 61 an das Grundgehäuse 20 heran geschwenkt. Dabei wird über das Federelement 80 eine Kraft auf die Messereinheitsführungswalze 49 ausgeübt, die dadurch in die Rastausnehmung 33 der Führungskulisse 32 hinein gedrückt wird. Über die Messereinheitsführungswalze 49 ist zugleich die zweite Kniehebelendachse 76 vorläufig in der Rastausnehmung festgelegt, da über den Messerschlitten 45 eine starre Verbindung zwischen den Achsen 44 und 48 gegeben ist.

Zugleich wird mit der Betätigung der Griffhebeleinheit 60 über den Führungssteg 65 an der Kniehebelachsenführungsnut 66 eine Kraft auf die Kniehebelführungswalze 74 an der Kniehebelmittelachse 73 ausgeübt. Da die zweite Kniehebelendachse 76 in dieser Phase, wie vorstehend beschrieben, noch festgelegt ist, erfolgt nun eine Ausweichbewegung des ersten Kniehebels 72 nach links. Über diesen wird das Anschlagelement 50 weiter nach vorn, also in Richtung der Klemmbacken 21, 31, geschoben, bis die Anschlagfläche 52 an dem Anschlagbolzen 62 anliegt.

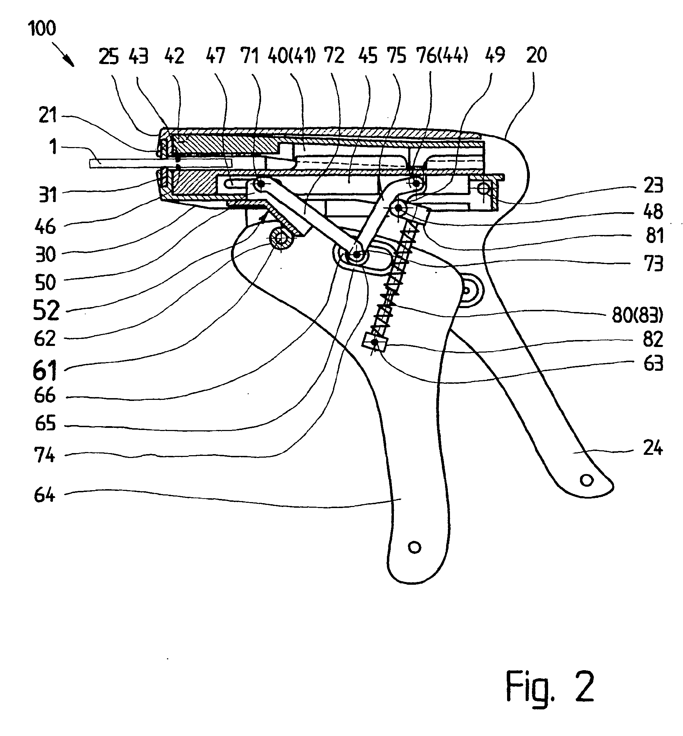

Dieser Zustand ist in Fig. 2 gezeigt: Die Klemmbacken 21, 31 klemmen das eingelegte Kabel 1 an seinem Außenumfang fest. Die Messerelemente 43, 46 sind mit ihren Schneiden in die Ummantelung des Kabels 1 eingedrungen und haben diese wenigstens teilweise durchtrennt. Dabei ist die Position der Schneidkante der Messerelemente 43, 46 jeweils so gewählt, dass diese nur geringfügig über die Klemmbakken 21, 31 hinaus in den zwischen Messerschlitten 45 und Messerbügel 41 eingeschlossenen Winkel nach innen ragt. Hierdurch wird sichergestellt, dass auch Kabel, die mit einer sehr dünnen Ummantelung versehen sind, nicht von den Messerelementen 43, 46 durchtrennt werden und dass insbesondere bei Litzen nur die äußere Ummantelung abgezogen wird, ohne dass Kupferlitzen von den Messern durchtrennt werden. Ein Anschneiden der Ummantelung im Umfangsbereich reicht bei den üblichen PVC-Ummantelungen elektrischer Kabel aus, um mit geringem Kraftaufwand ein Abreißen des Mantelteils und damit schließlich die vollständige Abtrennung der Ummantelung zu erreichen.

Das Abreißen wird durch eine Rückwärtsbewegung der Messereinheit 40 als dritte wesentliche Bewegungsphase bewirkt, wobei die Messerelemente 43, 46 im Eingriff mit der Ummantelung bleiben und das Kabel 1 neben den Messerelementen 43, 36 durch die Klemmbacken 21, 31 fest geklemmt bleibt.

Die dritte Arbeitsphase geht von der in Fig. 2 dargestellten Situation aus, wobei die Messereinheit 40 noch in ihrer vordersten Stellung nahe der Klemmbacken 21, 31 liegt und wobei die Anschlagfläche 52 sich am Anschlagbolzen 62 abstützt. Eine Verschiebung des Anschlagelements 50 ist nun nicht mehr möglich, so dass über das Anschlagelement 50 die erste Kniehebelendachse 71 festgelegt ist.

Die auf die Kniehebelmittelachse 73 ausgeübte Kraft wirkt auch auf den zweiten Kniehebel 75 und damit auf das Messereinheitsgelenk 44. Im Zuge der Betätigung der Griffhebeleinheit 60 steigt wegen des über das Anschlagelement 50 festgelegten ersten Kniehebels 72 die Kraft auf den zweiten Kniehebel 75 und die Messereinheit 40 soweit an, dass die Messereinheitsführungswalze 49 aus der Rastausnehmung 33 heraus gedrückt wird und die Messereinheit 40 in der Klemmenarmeinheit 30 nach hinten geschoben wird.

Mit der Bewegung der Messereinheit 40 wird der zu entfernende Teil der Ummantelung des Kabels 1 mit nach hinten gezogen und vollständig abgerissen. Damit ergibt sich die in Fig. 3 dargestellte Situation.

Durch Loslassen des Handgriffbereichs 64 wird durch die Kraft der Druckfeder 83 die Griffhebeleinheit 60 wieder in ihre Ausgangsstellung bewegt, wobei die Klemmenarmeinheit 30 gegenüber dem oberen Klemmenarm 25 des Grundgehäuses 20 abgespreizt wird, ebenso der Messerbügel 41 gegenüber dem Messerschlitten 45. Das bearbeitete Kabel 1 kann nun aus der geöffneten Abisolierzange 100 heraus genommen werden.

Der abgetrennte Teil der Ummantelung ist entweder automatisch ganz abgezogen worden, wenn die abzutrennende Länge nicht größer als die maximal mögliche Rücklauflänge der Messereinheit 40 ist. Ansonsten ist das zu entfernende Ende der Ummantelung aber soweit zurückgezogen, dass es vom Benutzer leicht ergriffen und vollständig über das Kabelende abgestreift werden kann.

In Fig. 3 ist eine Messerbügelführungsnut 22 erkennbar, in der ein an die Außenseite des Messerbügels 41 angeformter Führungsnocken 42 läuft. Mit diesem wird erreicht, dass sich der Messerbügel 41 auf einer vorgegebenen Bahn im Grundgehäuse 20 bewegt und dass der Messerbügel 41 nicht durch zusätzliche Federn, etc. von dem Messerschlitten 45 abgespreizt zu werden braucht.

Der besondere Vorteil der Erfindung wird durch die Kniehebeleinheit 70 erreicht. In allen Arbeitsphasen wird über die Kniehebel 72, 75 eine Kraft übertragen, die zum Zudrücken der Klemmbacken 21, 31 bzw. der Messerelemente 43, 46 führt und die Klemmung auch während der weiteren Arbeitsvorgänge beibehält, das heißt, es wird über die Kniehebeleinheit 70 stets eine so große Klemmkraft erzeugt, dass das zwischen den Klemmbacken 21, 31 eingeklemmte Kabel 1 bei der Rückzugsbewegung der Messereinheit 40 nicht bewegt wird. Zugleich mit der Klemmkraft wird über die Kniehebeleinheit 70 die Kraft für das vollständige Abreißen und Abziehen der Ummantelung aufgebracht. Kraftspitzen führen zur Einleitung der nächsten Bewegungsphase, so dass die auf das Kabel wirkenden Kräfte konstruktiv begrenzt sind.

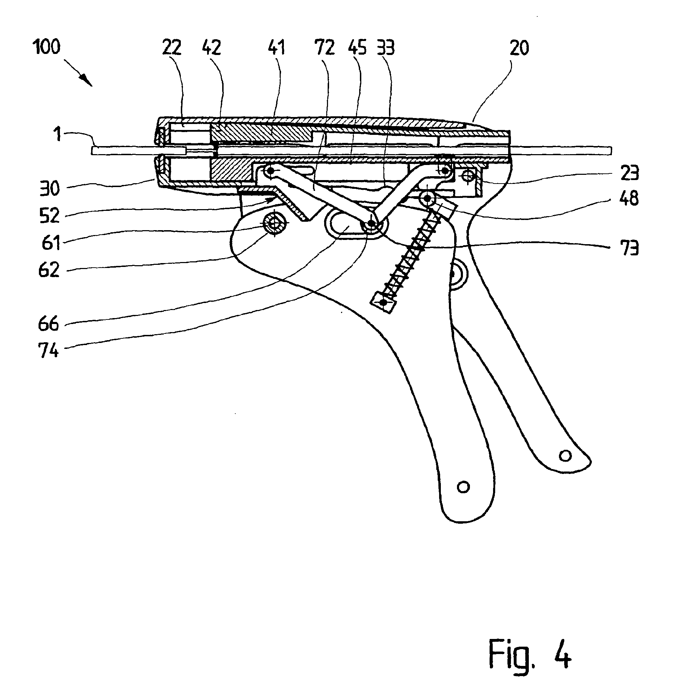

In Fig. 4 ist dargestel 1t, wie ein langes Kabelende durch die Abisolierzange 100, insbesondere durch dessen Messereinheit 40, hindurch geführt ist. Weiterhin ist die Kniehebelachsenführungsnut 34 in der Klemmenarmeinheit 30 erkennbar, durch die der Weg der ersten Kniehebelendachse 71, und damit auch der Weg des Anschlagelements 50, begrenzt ist. Wichtig ist hier insbesondere die Begrenzung des Vorlaufs der ersten Kniehebelendachse 71 nach vorne, da so verhindert wird, dass eine zu große Klemmkraft an den Klemmbacken 21, 31 ausgeübt wird und sehr dünne Kabel abgequetscht werden.

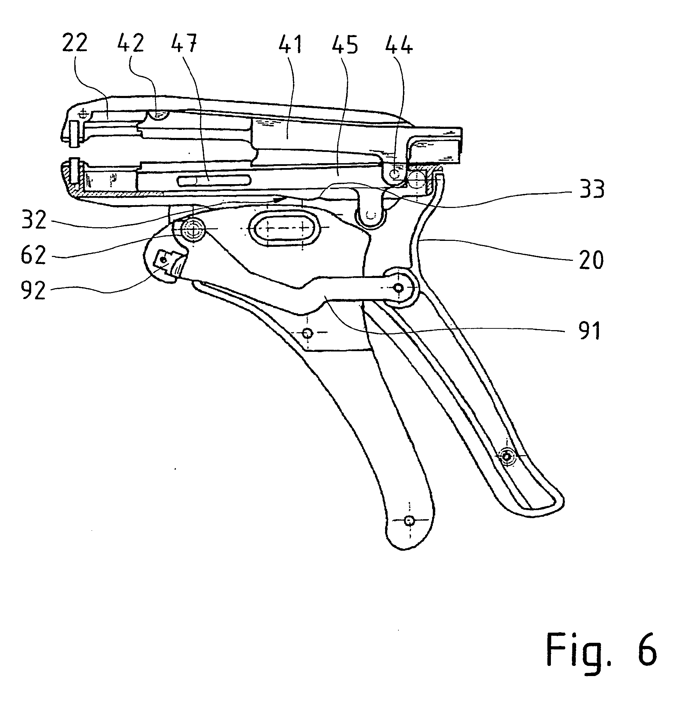

Fig. 6 zeigt eine Ausführungsform mit einer zusätzlichen Kabeltrennvorrichtung. Diese ist aus einem fest mit dem Grundgehäuse verbundenen Messerbügel 91 und einer an der Griffhebeleinheit 60 befestigten Klinge 92 gebildet. Beim Schwenken der Griffhebeleinheit 60 um das Griffhebelgelenk 61 wird die Klinge 92 auf den starren Messerbügel 91 zu bewegt. Ein dazwischen eingelegtes Kabel wird vollständig durchtrennt. Der Messerbügel 91 ist vorzugsweise am Anschlagbolzen 62 festgelegt, sowie an einem weiteren Punkt am Grundgehäuse 20, der beliebig gewählt werden kann, soweit er die Bedienung durch den Benutzer nicht behindert und auch eine freie Bewegung der Kniehebeleinheit 70 und des Federelements 80 ermöglicht. Der Übersichtlichkeit halber sind in Fig. 6 die Kniehebeleinheit 70, das Federelement 80 und das Anschlagelement 50 nicht dargestellt.

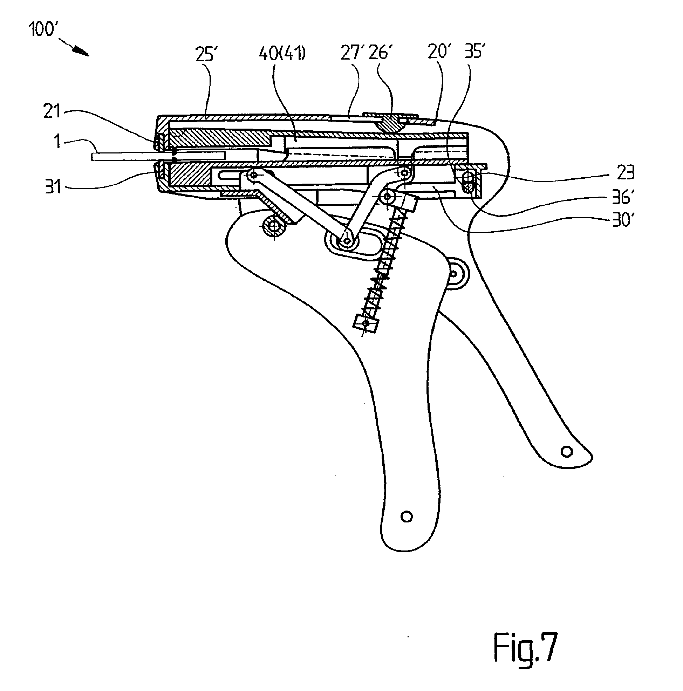

In Figur 7 ist eine weitere Ausführungsform einer Abisolierzange 100' dargestellt, bei der der Klemmenarm 25' des Gehäuses 20' ein der Oberseite der Messereinheit 40 gegenüberliegend angeordnetes Druckpunktelement 26' aufweist, das in einer Druckpunktelementführungsnut 27' verschiebbar geführt ist.

Durch das Druckpunktelement 26' kann ein Druckpunkt definiert und verändert werden, gegen den die Messereinheit 40 beim Betätigen der Abisolierzange gedrückt wird, und zwar in einer ersten Phase, in der der Messerbügel 41 und der Messerschlitten 45 sowie die Klemmbacken 21, 31 unter Einschluss eines zwischen ihnen liegenden Kabels 1 aufeinander zu bewegt werden. Die Messereinheit 40 drückt je nach Stellung des Druckpunktelements 26' etwas früher oder etwas später in seiner Bewegung gegen den so gebildeten Druckpunkt. Die Messereinheit 40 ist dann sowohl vorne an den Messerelementen wie auch weiter hinten am Druckpunktelement 26' festgelegt. Zugleich ist auch die Klemmenarmeinheit 30' vorne bei den Klemmbacken 21, 31 und indirekt über die Messereinheit 40 an dem Druckpunktelement 26' festgelegt.

Eine weiter steigende Kraft beim Betätigen der Abisolierzange 100' wird über die Messereinheitsführungswalze 49 auf die blockierte Klemmenarmeinheit 30' geleitet und führt zum Herausdrücken der Messereinheitsführungswalze 49 aus der Rastausnehmung 33 (vgl. Fig. 4), wodurch, wie oben bereits dargestellt, die Rückwärtsbewegung der Messereinheit 40 ausgelöst wird, die zum Abstreifen der abgetrennten Kabelisolierung führt.

Um die Biegeanspruchung der Klemmenarmeinheit 30 zu reduzieren - insbesondere zwischen dem Moment des Blockierens der Klemmenarmeinheit 30' durch Anlegen der Messereinheit 40 an das Druckpunktelement 26' und dem Beginn der Rückwärtsbewegung der Messereinheit nach dem Herausspringen der Messereinheitsführungswalze 49 aus der Rastausnehmung 33 - ist das Klemmenarmschwenklager 23' durch eine mit dem Grundgehäuse 20' verbundene Achse gebildet, die an einem Dämpfungselement 35' in der Klemmenarmeinheit 30' anliegt.

Das elastomere Dämpfungselement 35' ist bevorzugt unterhalb der Achse in einem Langloch 36' in der Klemmenarmeinheit 30' angeordnet und federt Kraftspitzen ab. Die zusätzliche Dämpfung kann sowohl bei der ersten dargestellten Ausführungsform der Abisolierzange 100 wie auch bei der Ausführungsform der Abisolierzange 100' mit dem Druckpunkt vorgesehen sein.

### Bezugszeichenliste:

- **100**: **Abisolierzange**

- **20, 20'**: **Grundgehäuse**
- 21: Klemmbacke
- 22: Messerbügelführungsnut
- 23; 23': Klemmenarmschwenklager
- 24: Handgriffbereich
- 25: oberer Klemmenarm
- 26': Druckpunktelement
- 27': Druckpunktelementführungsnut

- **30; 30**: **Klemmenarmeinheit**
- 31: Klemmbacke
- 32: Führungskulisse
- 33: Rastausnehmung
- 34: Kniehebelachsenführungsnut
- 35': Dämpfungselement
- 36': Langloch

- **40**: **Messereinheit**
- 41: Messerbügel
- 42: Führungsnocken
- 43: oberes Messerelement
- 44: Messereinheitsgelenk
- 45: Messerschlitten
- 46: unteres Messerelement
- 47: Kniehebelachsenführungsnut
- 48: Federelementaufnahmeachse
- 49: Messereinheitsführungswalze

- **50**: **Anschlagelement**
- 52: Anschlagfläche

- **60**: **Griffhebeleinheit**
- 61: Griffhebelschwenklager
- 62: Anschlagsbolzen
- 63: Federelementschwenklager
- 64: Handgriffbereich
- 65: Führungssteg
- 66: Kniehebelachsenführungsnut

- **70**: **Kniehebeleinheit**
- 71: erste Kniehebelendachse
- 72: erster Kniehebel
- 73: Kniehebelmittelachse
- 74: Kniehebelführungswalze
- 75: zweiter Kniehebel
- 76: zweite Kniehebelendachse

- **80**: **Federelement**
- 81: oberes Federlagerelement
- 82: unteres Federlagerelement
- 83: Druckfeder

- **1**: **Kabel**

## Patentansprüche

1. Automatische Abisolierzange (100; 100'), insbesondere für Flachkabel, mit wenigstens:
- einer Klemmenarmeinheit (30; 30'), an dessen vorderem Ende wenigstens eine Klemmbacke (31) angeordnet ist;
- einer verschiebbar in der Klemmenarmeinheit (30; 30') gelagerten Messereinheit (40), bestehend aus wenigstens einem Messerbügel (41) und einem damit über ein Messereinheitsgelenk (44) schwenkbar verbundenen Messerschlitten (45);
- einem Grundgehäuse (20) mit
• einem oberen Klemmenarm (25; 25'), in dem die Messereinheit (40) verschiebbar geführt ist,
• wenigstens einer Klemmbacke (21),
• einem Klemmenarmschwenklager (23; 23'), an dem die Klemmenarmeinheit (30; 30') schwenkbar gelagert ist;
- einer Griffhebeleinheit (60), die an einem Griffhebelschwenklager (61) schwenkbar mit dem Grundgehäuse (20) verbunden ist, und die wenigstens ein Federelementlager (63) aufweist;
**gekennzeichnet durch** eine Kniehebeleinheit (70), bestehend aus einem ersten und einem zweiten Kniehebelarm (72, 75), die über eine Kniehebelmittelachse (73) schwenkbar miteinander verbunden sind, wobei
- der erste Kniehebelarm (72) mit der ersten Kniehebelendachse (71) in einer Führungskulisse (32) der Klemmenarmeinheit (30; 30') geführt ist,
- der zweite Kniehebel (75) gelenkig an der Messereinheit (40) befestigt ist,
- und
- die Kniehebelmittelachse (73) in einer Kniehebelachsenführungsnut (66) in der Griffhebeleinheit (60) geführt ist.

2. Abisolierzange (100; 100') nach Anspruch 1, **dadurch gekennzeichnet, dass** das Grundgehäuse (20) einen Handgriffbereich (24) aufweist.

3. Abisolierzange (100; 100') nach Anspruch 1 oder 2, **dadurch gekennzeichnet, dass** die Griffhebeleinheit (60) wenigstens einen Anschlagbolzen (62) aufweist.

4. Abisolierzange (100; 100') nach Anspruch 3, **gekennzeichnet durch** ein Anschlagelement (50), das mit der ersten Kniehebelendachse (71) gegenüber der Klemmenarmeinheit (30; 30') verschiebbar ist und das mit einer Anschlagfläche (52) an den Anschlagbolzen (62) anzulegen ist.

5. Abisolierzange (100; 100') nach Anspruch 3 oder 4, **dadurch gekennzeichnet, dass** der erste Kniehebelarm (72) mit der ersten Kniehebelendachse (71) in der Kniehebelachsenführungsnut (34) der Klemmenarmeinheit (30; 30') verschiebbar gelagert ist.

6. Abisolierzange (100; 100') nach einem der vorhergehenden Ansprüche, **dadurch gekennzeichnet, dass** der Messerbügel (41) und/oder der Messerschlitten (45) wenigstens im Bereich der Schwenkachse (44) einen U-förmigen Querschnitt aufweist, und wobei zwischen Messerschlitten (45) und Messerbügel (41) ein Kabeldurchtrittskanal gebildet ist.

7. Abisolierzange (100; 100') nach einem der vorhergehenden Ansprüche, **dadurch gekennzeichnet, dass** die Kniehebelmittelachse (73) über eine Kniehebelführungswalze (74) rollbar in der Kniehebelachsenführungsnut (66) gelagert ist.

8. Abisolierzange (100; 100') nach einem der vorhergehenden Ansprüche, **dadurch gekennzeichnet, dass** die Führungskante der Kniehebelachsenführungsnut (66) durch einen Führungssteg (65) verdickt ist.

9. Abisolierzange (100; 100') nach einem der vorhergehenden Ansprüche, **dadurch gekennzeichnet, dass** der Messerschlitten (45) über einen Teil seiner Länge eine Kniehebelachsenführungsnut (47) aufweist, die wenigstens teilweise von der Kniehebelachsenführungsnut (34) der Klemmenarmeinheit (30; 30') überdeckt ist.

10. Abisolierzange (100; 100') nach einem der vorhergehenden Ansprüche, **dadurch gekennzeichnet, dass** die Klemmenarmeinheit (30; 30') an ihrer Unterseite eine Führungskulisse (32) aufweist, auf der die Messereinheit (40) über eine Messereinheitsführungswalze (49) geführt ist.

11. Abisolierzange (100; 100') nach Anspruch 10, **dadurch gekennzeichnet, dass** die Führungskulisse (32) wenigstens eine Rastausnehmung (33) aufweist.

12. Abisolierzange (100; 100') nach Anspruch 11, **dadurch gekennzeichnet, dass** die Messereinheitsführungswalze (49) an dem Federaufnahmegelenk (48) gelagert ist.

13. Abisolierzange (100; 100') nach einem der vorhergehenden Ansprüche, **dadurch gekennzeichnet, dass** die zweite Kniehebelendachse (76) in der Schwenkachse (44) der Messereinheit (40) angeordnet ist.

14. Abisolierzange (100; 100') nach einem der vorhergehenden Ansprüche, **dadurch gekennzeichnet, dass** der Messerschlitten (45) und/oder der Messerbügel (41) mit auswechselbaren Messerelementen (43, 46) versehen sind.

15. Abisolierzange (100; 100') nach einem der vorhergehenden Ansprüche, **dadurch gekennzeichnet, dass** der obere Klemmenarm (25) und/oder die Klemmenarmeinheit (30; 30') mit auswechselbaren Klemmbacken (21, 31) versehen sind.

16. Abisolierzange (100; 100') nach einem der vorhergehenden Ansprüche, **dadurch gekennzeichnet, dass** an der Griffhebeleinheit (60) eine Messerklinge (92) angeordnet ist, die sich mit einer Schwenkbewegung der Griffhebeleinheit (60) gegen ein feststehendes Messerelement (91) am Grundgehäuse (20) bewegt.

17. Abisolierzange (100') nach einem der vorhergehenden Ansprüche, **dadurch gekennzeichnet, dass** der obere Klemmenarm (25') ein der Oberseite der Messereinheit (40) gegenüberliegend angeordnetes Druckpunktelement (26') aufweist, das in einer Druckpunktelementführungsnut (27') geführt ist.

18. Abisolierzange (100') nach einem der vorhergehenden Ansprüche, **dadurch gekennzeichnet, dass** das Klemmenarmschwenklager (23') durch eine mit dem Grundgehäuse (20') verbundene Achse gebildet ist, die an einem in der Klemmenarmeinheit (30') angeordnetem Dämpfungselement (35') anliegt.

19. Abisolierzange (100') nach Anspruch 18, **dadurch gekennzeichnet, dass** das Dämpfungselement (35') unterhalb der Achse in einem Langloch (36') in der Klemmenarmeinheit (30') angeordnet ist.

## Claims

1. Automatic wire stripper (100; 100'), in particular for flat cables, comprising at least:
- a clamping arm unit (30; 30'), at the front end of which at least one clamping jaw (31) is disposed;
- a knife unit (40) mounted so as to be displaceable in the clamping arm unit (30; 30'), consisting of at least one knife bar (41) and a knife carriage (45) pivotally connected thereto by means of a knife unit joint (44);
- a base housing (20) with
. an upper clamping arm (25; 25'), in which the knife unit (40) is guided so as to be displaceable,
. at least one clamping jaw (21),
. a clamping arm swivel bearing (23, 23') on which the clamping arm unit (30; 30') is pivotally mounted;
a handle lever unit (6) which is connected to the base housing (20) so as to be pivotable on a handle lever swivel bearing (61) and which comprises at least one spring element bearing (63),
**characterised by** an articulated lever unit (70) consisting of a first and a second articulated lever arm (72, 75) which are connected to each other so as to be pivotable by means of an articulated lever centre axis (73), wherein
- the first articulated lever arm (72) is guided with the first articulated lever end axis (71) in a sliding guide (32) of the clamping arm unit (30; 30')
- the second articulated lever (75) is fixed in an articulated manner to the knife unit (40)
- and
- the articulated lever centre axis (73) is guided in an articulated lever axis guiding groove (66) in the handle lever unit (60).

2. Wire stripper (100; 100') according to claim 1, **characterised in that** the base housing (20) comprises a handle region (24).

3. Wire stripper (100; 100') according to claim 1 or 2, **characterised in that** the handle lever unit (60) comprises at least one stop bolt (62).

4. Wire stripper (100; 100') according to claim 3, **characterised by** a stop element (50) which can be displaced with the first articulated lever end axis (71) in relation to the clamping arm unit (30; 30') and which is to be arranged with a stop face (52) on the stop bolt (62).

5. Wire stripper (100; 100') according to claim 3 or 4, **characterised in that** the first articulated lever arm (72) is mounted so as to be displaceable with the first articulated lever end axis (71) in the articulated lever axis guiding groove (34) of the clamping arm unit (30; 30').

6. Wire stripper (100; 100') according to one of the preceding claims, **characterised in that** the knife bar (41) and / or the knife carriage (45) has / have a U-shaped cross-section at least in the region of the pivot axis (44), and wherein a cable passage channel is formed between the knife carriage (45) and the knife bar (41).

7. Wire stripper (100; 100') according to one of the preceding claims, **characterised in that** the articulated lever centre axis (73) is mounted so that it can roll via an articulated lever guide roller (74) in the articulated lever axis guiding groove (66).

8. Wire stripper (100; 100') according to one of the preceding claims, **characterised in that** the guiding edge of the articulated lever axis guiding groove (66) is thickened by a guiding web (65).

9. Wire stripper (100; 100') according to one of the preceding claims, **characterised in that** the knife carriage (45) comprises an articulated lever axis guiding groove (47) over a part of its length which is at least partially covered by the articulated lever axis guiding groove (34) of the clamping arm unit (30; 30').

10. Wire stripper (100; 100') according to one of the preceding claims, **characterised in that** the clamping arm unit (30; 30') comprises on its lower side a sliding guide (32) on which the knife unit (40) is guided by means of a knife unit guide roller (49).

11. Wire stripper (100; 100') according to claim 10, **characterised in that** the sliding guide (32) comprises at least one detent recess (33).

12. Wire stripper (100; 100') according to claim 11, **characterised in that** the knife unit guide roller (49) is mounted on the spring receiving joint (48).

13. Wire stripper (100; 100') according to one of the preceding claims, **characterised in that** the second articulated lever end axis (76) is arranged in the pivot axis (44) of the knife unit (40).

14. Wire stripper (100; 100') according to one of the preceding claims, **characterised in that** the knife carriage (45) and / or the knife bar (41) is / are provided with exchangeable knife elements (43, 46).

15. Wire stripper (100; 100') according to one of the preceding claims, **characterised in that** the upper clamping arm (25) and / or the clamping arm unit (30; 30') is / are provided with exchangeable clamping jaws (21, 31).

16. Wire stripper (100; 100') according to one of the preceding claims, **characterised in that** a knife blade (92) is arranged on the handle lever unit (60) and moves with a pivoting movement of the handle lever unit (60) against a fixed knife element (91) on the base housing (20).

17. Wire stripper (100') according to one of the preceding claims, **characterised in that** the upper clamping arm (25') comprises a pressure point element (26') lying opposite the upper side of the knife unit (40), which pressure point element (26') is guided in a pressure point element guiding groove (27').

18. Wire stripper (100') according to one of the preceding claims, **characterised in that** the clamping arm swivel bearing (23') is formed by an axis connected to the base housing (20') which lies against a damping element (35') arranged in the clamping arm unit (30').

19. Wire stripper (100') according to claim 18, **characterised in that** the damping element (35') is arranged below the axis in an elongated hole (36') in the clamping arm unit (30').

## Revendications

1. Pince à dénuder automatique (100; 100'), en particulier pour des câbles plats, comprenant au moins:
- un ensemble bras de serrage (30 ; 30') à l'avant duquel est agencée au moins une mâchoire de serrage (31) ;
- un ensemble couteau (40) logé coulissant dans l'ensemble bras de serrage (30 ; 30') et constitué au moins d'un étrier (41) et d'un chariot (45), ce dernier étant joint au premier, oscillant, par le biais d'un pivot (44) de l'ensemble couteau (40);
- un boîtier élémentaire (20) comprenant
• un bras de serrage supérieur (25; 25') dans lequel est guidé, coulissant, l'ensemble couteau (40),
• au moins une mâchoire de serrage (21),
• un palier de pivotement (23 ; 23') dans lequel est logé, oscillant, l'ensemble bras de serrage (30 ; 30') ;
- un ensemble poignée-levier (60) relié, oscillant au niveau d'un palier de pivotement (61), au boîtier élémentaire (20) et comportant au moins un appui de ressort (63) ;
**caractérisée par** un ensemble levier à rotule (70) composé d'un premier et d'un second bras de levier (72, 75) joints entre eux, pivotants, par le biais d'un axe central (73) dans lequel :
- le premier bras de levier à rotule- (72) est conduit, par le premier axe d'extrémité de levier (7-1), dans une coulisse-guide (32) agencée sur l'ensemble bras de serrage (30; 30'),
- le second bras de levier à rotule (75) étant fixé, par le biais d'une articulation, sur l'ensemble couteau (40)
- et l'axe central (73) de l'ensemble levier à rotule (70) étant conduit dans une rainure de guidage (66) ménagée dans l'ensemble poignée-levier (60).

2. Pince à dénuder (100 ; 100') selon la revendication 1 , **caractérisée en ce que** le boîtier élémentaire (20) comprend un secteur constituant une poignée (24).

3. Pince à dénuder (100 ; 100') selon la revendication 1 ou 2, **caractérisée en ce que** l'ensemble poignée-levier (60) comprend au moins une cheville d'arrêt (62).

4. Pince à dénuder (100 ; 100') selon la revendication 3, **caractérisée par** un organe de butée (50) qui, conjointement avec le premier axe d'extrémité de levier (71), est coulissant à l'égard de l'ensemble bras de serrage (30 ; 30') et qui, par le biais d'une surface de butée (52) peut être mis en appui contre la cheville d'arrêt (62).

5. Pince à dénuder (100 ; 100') selon la revendication 3 ou 4, **caractérisée en ce que** le premier bras de levier à rotule (72) est logé coulissant, par le biais du premier axe d'extrémité de levier (71), dans la rainure de guidage (34) de l'ensemble bras de serrage (30 ; 30').

6. Pince à dénuder (100 ; 100') selon l'une quelconque des revendications précédentes, **caractérisée en ce que** l'étrier de couteau (41) et/ou le chariot de couteau (45) présentent, au moins dans le secteur du pivot (44), un profil en U qui forme un conduit passe-crâble- entre le chariot (45) et l'étrier (41).

7. Pince à dénuder (100 ; 100') selon l'une quelconque des revendications précédentes, **caractérisée en ce que** l'axe central (73) du levier à rotule (72) est logé roulant dans la rainure de guidage (66), par le biais d'un rouleau-guide (74).

8. Pince à dénuder (100 ; 100') selon l'une quelconque des revendications précédentes, **caractérisée en ce que** l'épaisseur du bord d'appui de la rainure de guidage (66) est augmentée par la présence d'une moulure de guidage (65).

9. Pince à dénuder (100 ; 100') selon l'une quelconque des revendications précédentes, **caractérisée en ce que** le chariot de couteau (45) comporte, sur un tronçon de sa longueur, une rainure de guidage d'axe de levier (47) qui coïncide, au moins en partie, avec la rainure de guidage d'axe de levier (34) de l'ensemble bras de serrage (30 ; 30').

10. Pince à dénuder (100 ; 100') selon l'une quelconque des revendications précédentes, **caractérisée en ce que** l'ensemble bras de serrage (30 ; 30') comporte, sur sa face inférieure, une coulisse-guide (32) sur laquelle est conduit l'ensemble couteau (40), par le biais d'un rouleau-guide de couteau (49).

11. Pince à dénuder (100 ; 100') selon la revendication 10, **caractérisée en ce que** la coulisse-guide (32) comprend au moins une encoche d'arrêt (33).

12. Pince à dénuder (100 ; 100') selon la revendication 11, **caractérisée en ce que** le routeau-guide (4-9) de l'ensemble couteau (4-0) est monté sur appui au niveau de l'articulation logement de ressort (48).

13. Pince à dénuder (100 ; 100') selon l'une quelconque des revendications précédentes, **caractérisée en ce que** le second axe d'extrémité de levier (76) est agencé dans le pivot (44) de l'ensemble couteau (40).

14. Pince à dénuder (100 ; 100') selon l'une quelconque des revendications précédentes, **caractérisée en ce que** l'étrier de couteau (41) et/ou le chariot de couteau (45) sont équipés de lames (43, 46) interchangeables.

15. Pince à dénuder (100 ; 100') selon l'une quelconque des revendications précédentes, **caractérisée en ce que** le bras de serrage supérieur (25) et/ou l'ensemble bras de serrage (30 ; 30') sont équipés de mâchoires de serrage (21, 31) interchangeables.

16. Pince à dénuder (100 ; 100') selon l'une quelconque des revendications précédentes, **caractérisée en ce qu'**il est agencé, sur l'ensemble poignée-levier (60), une lame de couteau (92) qui, sur un mouvement de l'ensemble poignée-levier (60), se déplace en direction d'un organe de coupe fixe (91) monté sur le boîtier élémentaire (20).

17. Pince à dénuder (100') selon l'une quelconque des revendications précédentes, **caractérisée en ce que** le bras de serrage supérieur (25') comprend un organe de point d'appui (26') agencé à l'opposé de la face supérieure de l'ensemble couteau (40) et conduit à l'intérieur d'une rainure de guidage (27') de l'organe.

18. Pince à dénuder (100') selon l'une quelconque des revendications précédentes, **caractérisée en ce que** le pivot de bras de serrage (23') est constitué d'un axe relié au boîtier élémentaire (20'), cet axe étant disposé adjacent à un élément amortisseur (35) logé à l'intérieur de l'ensemble bras de serrage (30').

19. Pince à dénuder (100') selon la revendication 18, **caractérisée en ce que** l'élément amortisseur (35') est agencé en-dessous de l'axe, dans un trou oblong (36') ménagé dans l'ensemble bras de serrage (30').
